# EUROPÄISCHE PATENTSCHRIFT

(11) **EP 1 325 076 B1**
(45) Veröffentlichungstag und Bekanntmachung des Hinweises auf die Patenterteilung: **20.02.2008**
(21) Anmeldenummer: 01982268.3
(22) Anmeldetag: 10.09.2001
(51) Int. Cl.: C08L 25/12

(54) **ADDITIVMISCHUNGEN ENTHALTENDE THERMOPLASTISCHE FORMMASSEN**
THERMOPLASTIC MOULDING MATERIALS CONTAINING ADDITIVE MIXTURES
MATIERES MOULABLES THERMOPLASTIQUES CONTENANT DES MELANGES D'ADDITIFS

(30) Priorität: 21.09.2000 DE 10046772
(43) Veröffentlichungstag der Anmeldung: 09.07.2003
(73) Patentinhaber: LANXESS Deutschland GmbH, 51369 Leverkusen (DE)
(72) Erfinder: EICHENAUER, Herbert, 41539 Dormagen (DE)
(74) Vertreter: Gille Hrabal Struck Neidlein Prop Roos
(86) Internationale Anmeldenummer: PCT/EP2001/010428
(87) Internationale Veröffentlichungsnummer: WO 2002/024805

(56) Entgegenhaltungen:
- EP-A- 0 869 147

## Beschreibung

Gegenstand der vorliegenden Erfindung sind Zusammensetzungen enthaltend Matrix-Polymer, Pfropfpolymer und speziellen Additionsmischungen deren Verwendung zur Herstellung von Formkörpern sowie die daraus erhältlichen Formkörper. Gegenstand der Erfindung ist ferner die Additivkombination.

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen durch Spritzgießen (z.B. Gehäuse, Spielzeug, Kfz.-Teile), wobei es insbesondere auf eine sehr gute Fließfähigkeit des Polymermaterials ankommt. Außerdem müssen die so hergestellten Formteile in der Regel eine gute Kerbschlagzähigkeit sowie eine gute Beständigkeit bei thermischer Belastung aufweisen.

Es besteht die Aufgabe, bei gegebenem Kautschukgehalt, gegebener Kautschukteilchengröße und gegebenem Matrixharzmolekulargewicht möglichst hohe Zähigkeitswerte unter Beibehaltung der guten thermoplastischen Fließfähigkeit zu erzielen. Dabei sollten die hohen Zähigkeitswerte möglichst unabhängig vom Typ des eingesetzten Matrixharzes, insbesondere aber bei Verwendung der für ABS typischen Styrol/Acrylnitril-Copolymerisate und α-Methylstyrol/Acrylnitril-Copolymerisate, erhalten werden.

Eine Möglichkeit, die Zähigkeit von ABS-Polymerisaten bei gegebenem Kautschukgehalt, gegebener Kautschukteilchengröße und gegebenem Matrixmolehmlargewicht zu erhöhen, ist der Zusatz spezieller Silikonölverbindungen (vgl. EP-A 6521); allerdings können hierbei Nachteile wie schlechte Lackierbarkeit, ungenügende Bedruckbarkeit oder verschlechterte Streckspannungswerte (Gefahr von Weißbruch) auftreten. Auch wurde der Zusatz geringer Mengen EPDM-Kautschuk (vgl. EP-A 412 370) oder AES-Polymerisat (vgl. EP-A 412 371) beschrieben. Beide Methoden benötigen jedoch relativ teure Additivkomponenten in beträchtlichen Einsatzmengen.

Die Verwendung hoher Einsatzmengen einzelner niedermolekularer Additivkomponenten kann in speziellen Fällen eine Verbesserung der Verarbeitbarkeit bewirken, hiermit geht jedoch üblicherweise eine negative Beeinflussung sonstiger Eigenschaften wie z.B. Zähigkeit, Modul und Wärmeformbeständigkeit einher.

Es wurde nun gefunden, daß durch Einsatz spezieller Additivmischungen ABS-Produkte mit einer sehr guten Kombination aus Kerbschlagzähigkeit (sowohl bei Raumtemperatur als auch bei tiefer Temperatur) und ausgezeichneter thermoplastischer Verarbeitbarkeit erhalten werden.

Gegenstand der Erfindung sind thermoplastische Formmassen bzw. Zusammensetzungen enthaltend
A) 5 bis 95 Gew.-%, bevorzugt 10 bis 90 Gew.-% und besonders bevorzugt 20 bis 75 Gew.-% eines oder mehrerer thermoplastischer Homo-, Co- oder Terpolymerisate von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus
B) 5 bis 95 Gew.-%, bevorzugt 10 bis 90 Gew.-% und besonders bevorzugt 25 bis 80 Gew.-% eines oder mehrerer Pfropfpolymerisate von
   B.1) 5 bis 90 Gew.-Teilen, vorzugsweise 20 bis 80 Gew.-Teilen und besonders bevorzugt 25 bis 60 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus auf
   B.2) 95 bis 10 Gew.-Teile, vorzugsweise 80 bis 20 Gew.-Teile und besonders bevorzugt 75 bis 40 Gew.-Teile mindestens eines Kautschuks mit einer Glastemperatur ≤10°C
   und
C) 0,05 bis 10 Gew.-Teile, vorzugsweise 0,1 bis 8 Gew.-Teile und besonders bevorzugt 0,5 bis 5 Gew.-Teile jeweils pro 100 Gew.-Teile A) + B) einer Kombination von mindestens 3 Komponenten ausgewählt aus Verbindungen I), II), III) und IV), wobei I) eine Verbindung mit mindestens einer Struktureinheit 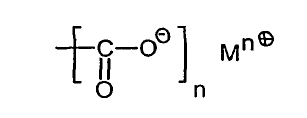 mit
   - M =: Metall, vorzugsweise Mg, Ca, Zn
   - n =: Wertigkeit des Metalls M, vorzugsweise 1 oder 2
darstellt,
II) eine Verbindung mit mindestens einer Struktureinheit 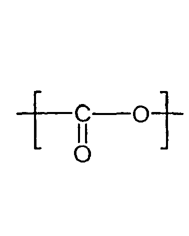 und mindestens einer Struktureinheit 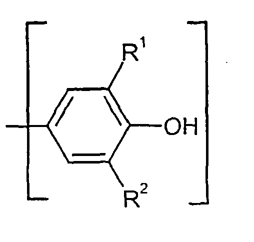 darstellt, wobei R¹ und R² unabhängig voneinander H oder C₁-C₂₀-Kohlenwasserstoff-Reste sind,
   III) eine Verbindung mit mindestens einer Struktureinheit 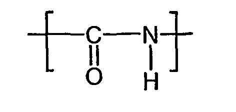 darstellt und
   IV) eine Verbindung mit Struktureinheiten, die verschieden von in den Verbindungen (I) bis (III) enthaltenen angegebenen Struktureinheiten bzw. Kombination von Struktureinheiten sind (d.h. die Verbindungen (IV) enthalten keine der in den Verbindungen (I) bis (III) enthaltenen Struktureinheiten bzw. Kombination von Struktureinheiten.

Vorzugsweise enthält jede der Verbindungen I) bis IV) mindestens einen endständigen aliphatischen C₆-C₃₂-Kohlenwasserstoff-Rest.

Erfindungsgemäß geeignete thermoplastische Polymerisate A) sind solche von Styrol, α-Methylstyrol, p-Methylstyrol, Vinyltoluol, Halogenstyrol, Methylacrylat, Methylmethacrylat, Acrylnitril, Maleinsäureanhydrid, N-substituiertem Maleinimid oder Mischungen daraus.

Die Polymerisate A) sind harzartig, thermoplastisch und kautschukfrei. Besonders bevorzugte Polymerisate A) sind solche aus Styrol, Methylmethacrylat, Styrol/Acrylnitril-Gemischen, Styol/Acrylnitril/Methylmethacrylat-Gemischen, Styrol/Methylmethacrylat-Gemischen, Acrylnitril/Methylmethacrylat-Gemischen, α-Methylstyrol/Acrylnitril-Gemischen, Styrol/α-Methylstyrol/Acrylnitril-Gemischen, α-Methylstyrol/Methylmethacrylat/Acrylnitril-Gemischen, Styrol/α-Methylstyrol/Methmethacrylat-Gemischen, Styrol/α-Methylstyrol/Methmethacrylat/Acrylnitril-Gemischen, Styrol/Maleinsäureanhydrid-Gemischen, Methylmethacrylat/Maleinsäureanhydrid-Gemischen, Styrol/Methylmethacrylat/Maleinsäureanhydrid-Gemischen, Styrol/-Acrylnitril/N-Phenylmaleinimid-Gemischen.

Die Polymerisate A) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte M̅_{w} von 20 000 bis 200 000 bzw. Grenzviskositäten [η] von 20 bis 110 ml/g /gemessen in Dimethylformamid bei 25°C).

Zur Herstellung der Pfropfpolymerisate B) geeignete Kautschuke sind insbesondere Polybutadien, Butadien/Styrol-Copolymerisate, Butadien/Acrylnitril-Copolymerisate, Polyisopren oder Alkylacrylatkautschuke auf der Basis von C₁-C₈-Alkylacrylaten, insbesondere Ethyl-, Butyl-, Ethylhexylacrylat.

Die Acrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Acrylatkautschuke können auch kleine Mengen, vorzugsweise bis zu 5 Gew.-% (bezogen auf Kautschukgewicht) vernetzend wirkender, ethylenisch ungesättigter Monomerer einpolymerisiert enthalten. Vernetzer sind z.B. Alkylendioldiacrylate und -methacrylate, Polyester-diacrylate und -methacrylate, Divinylbenzol, Trivinylbenzol, Triallylcyanurat, Allylacrylat und -methacrylat, Butadien und Isopren, Pfropfgrundlage können auch Acrylatkautschuke mit Kern/Schalen-Struktur sein mit einem Kern aus vernetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einen nicht-konjugierten Dien wie z.B. Dicyclopentadien), EPM-Kautschuke (Ethylen/Propylen-Kautschuke) und Silikonkautschuke, die gegebenenfalls ebenfalls eine Kern/Schalen-Struktur aufweisen können.

Bevorzugte Kautschuke zur Herstellung der Pfropfpolymerisate B) sind Dien- und Alkylacrylatkautschuke sowie EPDM-Kautschuke.

Die Kautschuke liegen im Pfropfpolymerisat B) in Form wenigstens partiell vernetzter Teilchen eines mittleren Teilchendurchmessers (d₅₀) von 0,05 bis 20 µm, Bevorzugt von 0,1 bis 2 µm und besonders bevorzugt von 0,1 bis 0,8 µm, vor. Der mittlere Teilchendurchmesser d₅₀ wird ermittelt durch Ultrazentrifugenmessungen nach W. Scholtan et al., Kolloid-Z. u.Z. Polymere 250 (1972), 782-796 oder durch Auswertung elektronenmikroskopischer Aufnahmen.

Die Polymerisate B) können durch radikalische Pfropfpolymerisation der Monomeren B.1) in Gegenwart der zu bepfropfenden Kautschuke B.2) hergestellt werden.

Bevorzugte Herstellungsverfahren für die Pfropfpolymerisate B) sind Emulsions-, Lösungs-, Masse- oder Suspensionspolymerisation und an sich bekannte Kombinationen aus diesen Verfahren. Besonders bevorzugte Pfropfpolymerisate B) sind die ABS-Polymerisate.

Ganz besonders bevorzugte Polymerisate B) sind Produkte, die durch radikalische Polymerisation von Mischungen aus Styrol und Acrylnitril, vorzugsweise im Gewichtsverhältnis 10:1 1 bis 1:1, besonders bevorzugt im Gewichtsverhältnis 5:1 bis 2:1, in Gegenwart mindestens eines aus überwiegend Dienmonomeren (vorzugsweise Polybutadien, das bis zu 30 Gew.-% Styrol und/oder Acrylnitril als Comonomere eingebaut enthalten kann) aufgebauten Kautschuks mit einem mittleren Teilchendurchmesser (d₅₀) von 100 bis 450 nm, ganz besonders bevorzugt in Gegenwart zweier aus überwiegend Dienmonomeren (vorzugsweise Polybutadien, das bis zu 30 Gew.-% und/oder Acrylnitril als Comonomere eingebaut enthalten kann) aufgebauter Kautschuke mit a) einem mittleren Teilchendurchmesser (d₅₀) von 150 bis 300 nm und b) einem mittleren Teilchendurchmesser (d₅₀) von 350 bis 450 nm im Gewichtsverhältnis (a):(b) = 10:90 bis 90:10, vorzugsweise 30:70 bis 60:40, erhalten wurden.

Der Kautschukgehalt der Polymerisate B) beträgt vorzugsweise 40 bis 95 Gew.-%, besonders bevorzugt 50 bis 90 Gew.-% und ganz besonders bevorzugt 55 bis 85 Gew.-%.

Als Einzelkomponenten der Additivmischung C) sind beispielsweise und bevorzugt geeignet:

### Als Komponente I):

Magnesiumstearat, Calciumstearat, Zinkstearat, Magnesiummontanat, Calciummontanat, Zinkmontanat, Magnesiumbehenat, Calciumbehenat, Zinkbehenat, Magnesiumoleat, Calciunioleat, Zinkoleat; bevorzugt sind Magnesiumstearat und Calciumstearat, besonders bevorzugt ist Magnesiumstearat.

### Als Komponente II):

Ester der 3,5-Di-tert.-butyl-4-hydroxyphenylessigsäure mit ein- oder mehrwertigen Alkoholen wie z.B. und bevorzugt Decanol, Undecanol, Dodecanol, Tridecanol, Tetradecanol, Pentadecanol, Hexadecanol, Octadecanol, 1,6-Hexandiol, Neopentylglycol, 1,9-Nonandiol, Ethylenglycol, Diethylenglycol, Triethylenglycol, Pentaerythrit, 3-Thiaundecanol, 3-Thiapentadecanol, Trimethylolpropan.

Ester der β-(3,5-Di-tert.-butyl-4-hydroxyphenyl)-propionsäure mit ein- oder mehrwertigen Alkoholen wie z.B. und bevorzugt Decanol, Undecanol, Dodecanol, Tridecanol, Tetradecanol, Pentadecanol, Hexadecanol, Octadecanol, 1,6-Hexandiol, Neopentylglycol, 1,9-Nonandiol, Ethylenglycol, Diethylenglycol, Triethylenglycol, Pentaerythrit, 3-Thiaundecanol, 3-Thiapentadecanol, Trimethylolpropan.

Ester der β-(5-tert.-Butyl-4-hydroxy-3-methylphenyl)-propionsäure mit ein- oder mehrwertigen Alkoholen wie z.B. und bevorzugt Decanol, Undecanol, Dodecanol, Tridecanol, Tetradecanol, Pentadecanol, Hexadecanol, Octadecanol, 1,6-Hexandiol, Neopentylglycol, 1,9-Nonandiol, Ethylenglycol, Diethylenglycol, Triethylenglycol, Pentaerythrit, 3-Thiaundecanol, 3-Thiapentadecanol, Trimethylolpropan.

Ester der β-(3,5-Dicyclohexyl-4-hydroxyphenyl)-propionsäure mit ein- oder mehrwertigen Alkoholen wie z.B. und bevorzugt Decanol, Undecanol, Dodecanol, Tridecanol, Tetradecanol, Pentadecanol, Hexadecanol, Octadecanol, 1,6-Hexandiol, Neopentylglycol, 1,9-Nonandiol, Ethylenglycol, Diethylenglycol, Triethylenglycol, Pentaerythrit, 3-Thiaundecanol, 3-Thiapentadecanol, Trimethylolpropan.

Bevorzugt sind Ester der β-(3,5-Di-tert.-butyl-4-hydroxyphenyl)-propionsäure und/oder der β-(5-tert.-Butyl-4-hydroxy-3-methylphenyl)-propionsäure, besonders bevorzugt sind Ester der β-(3,5-Di-tert.-butyl-4-hydroxyphenyl)-propionsäure.

### Als Komponente III):

Ethylendiaminbisstearylamid, Erucasäureamid, Ölsäureamid, Stearinsäureamid, Behensäureamid, Montansäureamid, bevorzugt sind Ethylendiaminbisstearylamid und/oder Erucasäureamid, besonders bevorzugt ist Ethylendiaminbisstearylamid.

### Als Komponente IV):

Paraffinöle, Kohlenwasserstoffwachse, niedermolekulares Polystyrol hergestellt unter Verwendung von C₈-C₁₈-Alkylmercaptanen als Molekulargewichtsregler mit mittleren Molekulargewichten (M̅_{w}) zwischen 2 000 und 15 000, vorzugsweise zwischen 2 500 und 12 000 und besonders bevorzugt zwischen 3 000 und 10 000, niedermolekulares Styrol/Acrylnitril-Copolymerisat hergestellt unter Verwendung von C₈-C₁₈-Alkylmercaptanen als Molekulargewichtsregler mit mittleren Molekulargewichten (M̅_{w}) zwischen 2 000 und 15 000, vorzugsweise zwischen 2 500 und 12 000 und besonders bevorzugt zwischen 3 000 und 10 000, niedermolekulares α-Methylstyrol/Acrylnitril-Copolymerisat hergestellt unter Verwendung von C₈-C₁₈-Alkylmercaptanen als Molekulargewichtsregler mit mittleren Molekulargewichten (M̅_{w}) zwischen 2 000 und 15 000, vorzugsweise zwischen 2500 und 12000 und besonders bevorzugt zwischen 3 000 und 10 000, niedermolekulares Polymethylmethacrylat hergestellt unter Verwendung von C₈-C₁₈-Alkylmercaptanen als Molekulargewichtsregler mit mittleren Molekulargewichten (M̅_{w}) zwischen 2 000 und 15 000, vorzugsweise zwischen 2 500 und 12 000 und besonders bevorzugt zwischen 3 000 und 10 000, C₆-C₃₂-Alkanole, z.B. und bevorzugt Stearylalkohol, C₆-C₃₂-Alkenole, z.B. und bevorzugt Oleylalkohol.

Bevorzugt sind Paraffinöle, niedermolekulare Styrol/Acrylnitril-Copolymerisate oder α-Methylstyrol/Acrylnitril-Copolymerisate, besonders bevorzugt sind Paraffinöle oder niedermolekulare Styrol/Acrylnitril-Copolymerisate oder jeweils Mischungen hieraus.

Vorzugsweise besitzen alle Komponenten I), II), III), und IV) ein Molekulargewicht über 300, vorzugsweise über 400 und besonders bevorzugt über 500.

Die Mengenverhältnisse beim erfindungsgemäßen Einsatz von mindestens 3 Komponenten ausgewählt aus den Komponenten I), II), III) und IV) können in weiten Bereichen variiert werden. Vorzugsweise werden sie so gewählt, daß die Beziehung

| | | |
|---|---|---|
| | (I) ≤ (IV) ≤ (II) ≤ (III), | |
| besonders bevorzugt | (I) ≤ (IV) ≤ (II) < (III) | und |
| ganz besonders bevorzugt | (I) < (IV) ≤ (II) < (III), | |

oder die Beziehung

| | | |
|---|---|---|
| | (I) ≤ (IV) ≤ (III) ≤ (II), | |
| besonders bevorzugt | (I) ≤ (IV) < (III) ≤ (II) | und |
| ganz besonders bevorzugt | (I) < (IV) < (III) ≤ (II) | |

gilt.

Besonders bevorzugte Mischungen enthalten 15 bis 65 Gew.-% Pfropfpolymerisat von 25 bis 60 Gew.-Teilen Styrol, α-Methylstyrol, Acrylnitril, N-Phenylmaleinimid oder Mischungen daraus auf 75 bis 40 Gew-Teile Polybutadien,
85 bis 35 Gew.-% thermoplastischem Copolymerisat aus 5 bis 40 Gew.-Teilen Acrylnitril und 95 bis 60 Gew.-Teilen Styrol, α-Methylstyrol, N-Phenylmaleinimid oder Mischungen daraus und
0,5 bis 5 Gew.-Teilen pro 100 Gew.-Teilen A+B einer Kombination von mindestens 3 Komponenten ausgewählt aus
I) Magnesiumstearat,
II) Octadecyl-3-(3,5-di-tert.butyl-4-hydroxyphenyl)-propionat oder Tetradecyl-3-(3,5-di-tert.butyl-4-hydroxyphenyl)-propionat oder Dodecyl-3-(3,5-di-tert.butyl-4-hydroxyphenyl)-propionat,
III) Ethylendiaminbisstearylamid
IV) Paraffinöl oder niedermolekulares Styrol/Acrylnitril-Copolymer.

Die erfindungsgemäßen Mischungen, enthaltend A), B) und C) und gegebenenfalls übliche Zusatzstoffe wie Verarbeitungsmittel, Stabilisatoren, Pigmente, Antistatika, Füllstoffe werden hergestellt, indem man die jeweiligen Bestandteile in bekannter Weise simultan oder sukzessive bei Zimmertemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen bzw. Zusammensetzungen der vorliegenden Erfindung können zur Herstellung von Formkörpern jeder Art verwendet werden, wobei übliche Herstellungsweisen benutzt werden können, insbesondere können Formkörpern durch Spritzguß hergestellt werden.

Eine weitere Form der Verarbeitung der erfindungsgemäßen Formmassen ist die Herstellung von Formkörpern durch Tiefziehen aus vorher nach bekannten Verfahren hergestellten Platten oder Folien.

Gegenstand der vorliegenden Erfindung sind daher ferner das Verfahren zur Herstellung der Formmassen deren Verwendung zur Herstellung von Formkörpern sowie daraus erhältliche Formkörper. Gegenstand der vorliegenden Erfindung ist weiterhin die Additivkombination gemäß Komponente C.

### Beispiele

### Thermoplastharz A1

Statistisches Styrol/Acrylnitril (72:28) - Copolymerisat mit einem M̅_{w} von ca. 115 000, ermittelt durch GPC (Gelpermeationschromatographie).

### Thermoplastharz A2

Statistisches α-Methylstyrol/Acrylnitril (72:28) - Copolymerisat mit einem M̅_{w} von ca. 75 000, ermittelt durch GPC.

### Pfropfpolymerisat B1

Pfropfprodukt erhalten durch Emulsionspolymerisation von 42 Gew.-% eines Styrol/Acrylnitril-Gemisches (Gewichtsverhältnis 73:27) auf 58 Gew.-% einer 1:1-Mischung (Gewichtsverhältnis) zweier teilchenförmiger Polybutadiene mit a) einem mittleren Teilchendurchmesser (d₅₀) von 290 nm und b) einem mittleren Teilchendurchmesser (d₅₀) von 420 nm. Aufarbeitung durch Koagulation des Latex mit Magnesiumsulfat, Waschen mit Wasser und anschließende Trocknung im Vakuum.

### Pfropfpolymerisat B2

Pfropfprodukt erhalten durch Emulsionspolymerisation von 50 Gew.-% eines Styrol/Acrylnitril-Gemisches (Gewichtsverhältnis 73:27) auf 50 Gew.-% teilchenförmiges Polybutadien mit einem mittleren Teilchendurchmesser (d₅₀) von 130 nm. Auf arbeitung wie unter B 1.

| | |
|---|---|
| Additiv CI1: | Magnesiumstearat |
| | (Fa. Bärlocher, München, Deutschland) |
| Additiv CI2 | Calciumstearat |
| | (Fa. Bärlocher, München, Deutschland) |
| Additiv CII1: | Octadecyl-3-(3,5-di-tert.butyl-4-hydroxyphenyl)-propionat (Irganox 1076^{®}, Ciba Speciality, Basel, Schweiz) |
| Additiv CII2: | Pentaerythrityl-tetrakis-[3-(3,5-di-tert.butyl-4-hydroxyphenyl)-propionat] (Irganox 1010^{®}, Ciba Speciality) |
| Additiv CIII1: | Ethylendiaminbisstearylamid (Fa. Henkel KG, Düsseldorf, Deutschland) |
| Additiv CIV1: | Niedermolekulares Styrol/Acrylnitril-Copolymerisat (M̅_{w} ≈ 4 200, ermittelt durch GPC) hergestellt durch radikalische Emulsionspolymerisation einer Mischung aus 63,9 Gew.-Teilen Styrol, 23,6 Gew.-Teilen Acrylnitril und 12,5 Gew.-Teilen tert.-Dodecylmercaptan. |
| Vergleichsadditiv V: | Vulkanox BKF^{®} (Bayer AG; Leverkusen, Deutschland) |

Die Einzelkomponenten werden in den in Tabelle 1 angegebenen Gewichtsanteilen auf einem 1,3 1 Innenkneter bei Temperaturen von 160°C bis 200°C compoundiert, Die Formkörper werden auf einer Spritzgießmaschine bei 240°C hergestellt.

Die Kerbschlagzähigkeit wird bei Raumtemperatur (aₖ^{RT}) und bei -30°C (aₖ^{-30°C}) nach ISO 180/1A (Einheit: kJ/m²) ermittelt, die Beurteilung der thermoplastischen Fließfähigkeit erfolgt durch Messung des Schmelzfließindex (MVR) gemäß DIN 53 735 U (Einheit: cm³/10 min).

Wie ebenfalls aus Tabelle 1 ersichtlich ist, wird nur bei Einsatz der erfindungsgemäßen Mischungen eine sehr gute Kombination aus hoher Zähigkeit, insbesondere auch bei tiefer Temperatur, und guter themoplastischer Verarbeitbarkeit erreicht.

**Tabelle 1: Zusammensetzungen und Prüfdaten der Formmassen**

| Beispiel Nr. | A1 Gew.- Teile | A2 Gew.- Teile | B1 Gew.- Teile | B2 Gew.- Teile | CI1 Gew.- Teile | CI2 Gew.- Teile | CII1 Gew.- Teile | CII2 Gew.- Teile | CIII1 Gew.- Teile | CIV1 Gew.- Teile | V Gew.- Teile | aₖ^{RT} (kJ/m²) | aₖ^{-30°C} (kJ/m²) | MVR (cm³/ 10 min) |
|---|---|---|---|---|---|---|---|---|---|---|---|---|---|---|
| 1 | 70 | - | 30 | - | - | - | 2 | - | 1 | 0,5 | - | 18,5 | 16,4 | 10,3 |
| 2 | 70 | - | 30 | - | - | - | 1 | - | 2 | 0,5 | - | 18,5 | 16,5 | 11,3 |
| 3 | 70 | - | 30 | - | 0,5 | - | 2 | - | - | 0,5 | - | 18,7 | 16,2 | 9,2 |
| 4 | 70 | - | 30 | - | 0,5 | - | 2 | - | 1 | 0,5 | - | 18,5 | 16,4 | 10,6 |
| 5 | 70 | - | 30 | - | - | 0,5 | 1 | - | 2 | 0,5 | - | 19,6 | 16,7 | 11,7 |
| 6 | 70 | - | 30 | - | - | - | - | 1 | 2 | 0,5 | - | 19,1 | 16,4 | 11,2 |
| 7 (Vergl.) | 70 | - | 30 | - | - | - | 2 | - | - | 0,5 | - | 15,8 | 8,3 | 9,1 |
| 8 (Vergl.) | 70 | - | 30 | - | - | - | 2 | - | - | - | - | 16,4 | 8,7 | 8,6 |
| 9 (Vergl.) | 70 | - | 30 | - | - | - | - | - | 2 | 0,5 | 1 | 16,2 | 7,8 | 8,0 |
| 10 | - | 75 | 12,5 | 12,5 | - | - | 2 | - | 1 | 0,5 | - | 17,4 | 7,5 | 5,6 |
| 11 | - | 75 | 12,5 | 12,5 | 0,5 | - | 2 | - | 1 | 0,5 | - | 17,9 | 7,1 | 5,9 |
| 12 | - | 75 | 12,5 | 12,5 | - | 0,5 | 2 | - | 1 | 0,5 | - | 17,7 | 7,4 | 6,0 |
| 13 | - | 75 | 12,5 | 12,5 | 0,5 | - | - | 2 | 1 | 0,5 | - | 18,1 | 7,5 | 6,0 |
| 14 (Vergl.) | - | 75 | 12,5 | 12,5 | - | - | 2 | - | - | 0,5 | - | 13,0 | 7,3 | 4,9 |
| 15 (Vergl.) | - | 75 | 12,5 | 12,5 | - | - | 2 | - | - | - | - | 13,8 | 7,3 | 4,4 |
| 16 (Vergl.) | - | 75 | 12,5 | 12,5 | - | - | - | - | - | - | - | 10,3 | 6,8 | 4,9 |
| 17 (Vergl.) | - | 75 | 12,5 | 12,5 | - | - | - | - | - | 0,5 | - | 6,7 | n.b. | 4,9 |
| 18 (Vergl.) | - | 75 | 12,5 | 12,5 | - | - | - | - | 1 | 0,5 | - | 12,1 | 6,7 | 5,8 |
| 19 (Vergl.) | - | 75 | 12,5 | 12,5 | 0,5 | - | - | - | - | 0,5 | - | 10,9 | 6,3 | 4,5 |
| 20 (Vergl.) | - | 75 | 12,5 | 12,5 | - | - | - | - | 1 | - | - | 11,9 | 7,1 | 5,3 |
| 21(Vergl.) | - | 75 | 12,5 | 12,5 | 0,5 | - | - | - | - | - | - | 11,5 | 6,9 | 4,1 |
| 22 (Vergl.) | - | 75 | 12,5 | 12,5 | - | - | - | - | 1 | 0,5 | 2 | 13,5 | 6,8 | 4,6 |

## Patentansprüche

1. Zusammensetzung enthaltend
A) 5 bis 95 Gew.% eines oder mehrerer thermoplastischer Homo-, Co-oder Terpolymerisate von Styrol, α-Methylstyrol, kernsubstituiertern Styrol, Methylmethacrylat, Acrylnitril, Methacrylnitril, Maleinsäureanhydrid. N-substituiertem Maleinimid oder Mischungen daraus
B) 5 bis 95 Gew.% eines oder mehrerer Pfropfpolymerisate von
B.1) 5 bis 90 Gew.-Teilen Styrol, α-Methylstyrol, kernsubstihuertem Styrol, Methylmethacrylat, Acrylnitril, Methacrylnitril, Maleinsäureanhydrid, N-substituiertem Maleinimid oder Mischungen daraus auf
B.2) 95 bis 10 Gew.-Teile mindestens eines Kautschuks mit einer Glastemperatur ≤ 10°C
und
C) 0,05 bis 10 Gew.-Teile (pro 100 Gew.-Teile A + B) einer Kombination von mindestens 3 Komponenten ausgewählt aus Verbindungen I), II). III) und IV), wobei I) eine Verbindung mit mindestens einer Struktureinheit 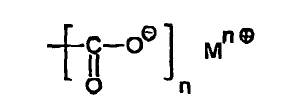
M = Metall und
n = Wertigkeit des Metalls M
darstellt,
II) eine Verbindung mit mindestens einer Struktureinheit 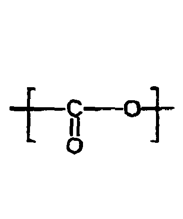 und mindestens einer Struktureinheit 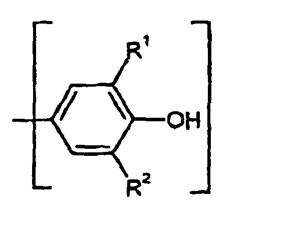 darstellt, wobei R¹ und R² unabhängig voneinander H, C₁-C₂₀-Kohlenwasserstoff Reste sind,
III) eine Verbindung mit mindestens einer Struktureinheit 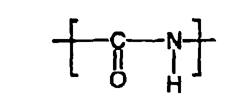 darstellt und
IV) eine Verbindung ausgewählt aus Paraffinölen, Kohlenwasserstoffwachsen, Polystyrol hergestellt unter Verwendung von C₈-C₁₈-Alkylmercaptanen als Molekulargewichtsregler mit mittleren Molekulargewichten (M̅_{w}) zwischen 2000 und 15 000, Styrol/Acrylnitril-Copolymerisat hergestellt unter Verwendung von C₈-C₁₈-Alkylmercaptanen als Molekulargewichtsregler mit mittleren Molekulargewichten (M̅_{w}) zwischen 2 000 und 15 000, α-Methylstycol/Acrylnitril-Copolymerisat hergestellt unter Verwendung von C₈-C₁₈-Alkylmercaptanen als Molekulargewichtsregler mit mittleren Molekulargewichten (M̅_{w}) zwischen 2 000 und 15 000, polymethylmethacrylat hergestellt unter Verwendung von C₈-C₁₈-Alkylmercaptanen als Molekulargewichtsregler mit mittleren Molekulargewichten (M̅_{w}) zwischen 2000 und 15 000, C₆-C₃₂-Alkanole, C₆-C₃₂-Alkenole ist.

2. Zusammensetzung gemäß Anspruch 1, wobei jede der Verbindungen (I) bis (IV) mindestens einen endständigen C₆-C₃₂-Kohlenwasserstoff-Rest enthält.

3. Zusammensetzung gemäß Anspruch 1 oder 2, wobei Verbindung (I) ausgewählt ist aus Magnesiumstearat, Calciumstearat, Zinkstearat, Magnesiummontanat, Calciummontanat, Zinkmontanat, Magnesiumbehenat, Calciumbehenat, Zinkbehenat, Magnesiumoleat, Calciumoleat, Zinkoleat.

4. Zusammensetzung gemäß Anspruch 1 oder 2, wobei Verbindung (II) ausgewählt ist Estern der 3,5-Di-tert.-butyl-4-hydroxyphenylessigsäure, der β-(3,5-Di-tert.-butyl-4-hydroxyphenyl)-propionsäure, der β-(5-tert.-Butyl-4-hydroxy-3-methylphenyl)-propionsäure oder der β-(3,5-Dicyclohexyl-4-hydroxyphenyl)-propionsaure mit ein- oder mehrwertigen Alkoholen.

5. Zusammensetzung gemäß Anspruch 1, oder 2, wobei Verbindung (III) ausgewählt ist aus Ethylendiaminbisstearylamid, Erucasäureamid, Ölsäureamid, Stearinsäureamid, Behensäureamid, Montansäureamid.

6. Zusammensetzung gemäß einem oder mehreren der vorhergehenden Ansprüche, wobei die Verbindungen (I) bis (IV) jeweils ausgewählt sind aus:
| | |
|---|---|
| Verbindung (I): | Magnesiumstearat und Calciumstearat, |
| Verbindung (II): | Cictadecyl-3-(3,5-di-tert.butyl-4-hydroxyphenyl)-propionat |
| Verbindung (III): | Ethylendiaminbisstearylamid und Erucasäureamid, |
| Verbindung (IV): | Paraffinöle, niedermolekulare Styrol/Acrylnitril-Copolymerisate und α-Methylstyrol/Acrylnitril-Copolymerisate. |

7. Zusammensetzung gemäß einem oder mehreren der vorhergehenden Ansprüche, wobei die Mengenverhältnisse von mindestens 3 Komponenten ausgewählt aus (I), (II), (III) und (IV) folgende Beziehung hat (I) ≤ (IV) ≤ (II) ≤ (III) oder (I) ≤ (IV) ≤ (III) ≤ (II).

8. Zusammensetzung gemäß einem oder mehreren der vorhergehenden Ansprüche enthaltend 0,5 bis 5 Gew.-Teile C) pro 100 Gew.-Teilen A+B.

9. Zusammensetzung gemäß einem oder mehreren der vorhergehenden Ansprüche, wobei Komponente B.2 ausgewählt ist aus Dien- oder Alkylacrylatkautschuken oder EPDM-Kautschuken.

10. Zusammensetzung gemäß einem oder mehreren der vorhergehenden Ansprüche, enthaltend Verarbeitungshilfsmittel, Stabilisatoren, Pigmente, Antistatika und/oder Füllstoffe.

11. Verwendung der Zusammensetzung nach einem oder mehreren der vorhergehenden Ansprüche zur Herstellung von Formkörpern.

12. Formkörper, erhältlich aus Zusammensetzung nach einem oder mehreren der vorhergehenden Ansprüche.

13. Additivkombination enthaltend mindestens 3 Komponenten ausgewählt aus Verbindungen I), II), III) und IV), wobei 1) eine Verbindung mit mindestens einer Struktureinheit 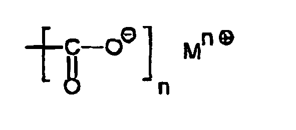
M = Metall und
n = Wertigkeit des Metalls M
darstellt,
In eine Verbindung mit mindestens einer Struktureinheit 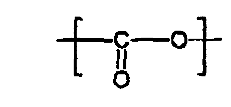 und mindestens einer Struktureinheit 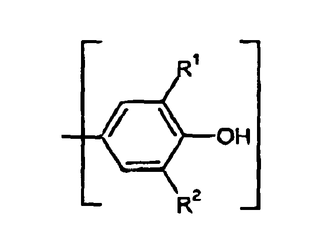 darstellt, wobei R¹ und R² unabhängig voneinander H, C₁-C₂₀-Kohlenwasserstoff-Reste sind,
III) eine Verbindung mit mindestens einer Struktureinheit 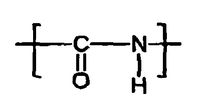 darstellt und
IV) eine Verbindung ausgewählt aus Paraffinölen, Kohlenwasserstoffwachsen, Polystyrol hergestellt unter Verwendung von C₈-C₁₈-Alkyl-mercaptanen als Molekulargewichtsregler mit mittleren Molekulargewichten (M̅_{w}) zwischen 2 000 und 15 000, Styrol/Acrylnitril-Copolymerisat hergestellt unter Verwendung von C₈-C₁₈-Alkylmercaptanen als Molekulargewichtsregler mit mittleren Molekulargewichten (M̅_{w}) zwischen 2 000 und 15 000, α-Methylstyrol/Acrylnitril-Copolymerisat hergestellt unter Verwendung von C₈-C₁₈-Alkylmercaptanen als Molekulargewichtsregler mit mittleren Molekulargewichten (M̅_{w}) zwischen 2 000 und 15 000, Polymethylmethacrylat hergestellt unter Verwendung von C₈-C₁₈-Alkyhnercaptanen als Molekulargewichtsregler mit mittleren Molekulargewichten (M_{w}) zwischen 2000 und 15 000, C₆-C₃₂-Alkanole, C₆-C₃₂-Alkenole ist.

## Claims

1. Composition containing
A) 5 to 95 wt.% of one or more thermoplastic homo-, co- or terpolymers of styrene, α-methylstyrene, ring-substituted styrene, methyl methacrylate, acrylonitrile, methacrylonitrile, maleic anhydride, N-substituted maleimide or mixtures thereof,
B) 5 to 95 wt.% of one or more graft polymers of
B.1) 5 to 90 parts by weight of styrene, α-methylstyrene, ring-substituted styrene, methyl methacrylate, acrylonitrile, methacrylonitrile, maleic anhydride, N-substituted maleimide or mixtures thereof on
B.2) 95 to 10 parts by weight of at least one rubber having a glass transition temperature ≤ 10°C
and
C) 0.05 to 10 parts by weight (per 100 parts by weight of A + B) of a combination of at least 3 components selected from compounds I), II), III) and IV), where I) denotes a compound having at least one structural unit 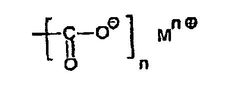
M = metal and
n = valency of the metal M,
II) denotes a compound having at least one structural unit 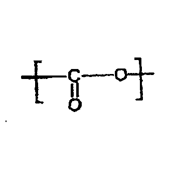 and at least one structural unit 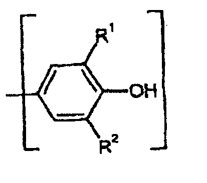 where R¹ and R² are, independently of one another, H, C₁-C₂₀-hydrocarbon radicals,
III) denotes a compound having at least one structural unit 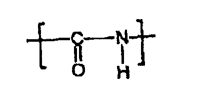 and
IV) is a compound selected from paraffin oils, hydrocarbon waxes, polystyrene produced by using C₈-C₁₈-alkyl mercaptans as molecular weight regulators with mean molecular weights (M̅_{w}) between 2000 and 15 000, styrene/acrylonitrile copolymer produced by using C₈-C₁₈-alkyl mercaptans as molecular weight regulators with mean molecular weights (M̅_{w}) between 2000 and 15 000, α-methylstyrene/acrylonitrile copolymer produced using C₈-C₁₈-alkyl mercaptans as molecular weight regulators with mean molecular weights (M̅_{w}) between 2000 and 15 000, polymethyl methacrylate produced by using C₈-C₁₈-alkyl mercaptans as molecular weight regulators with mean molecular weights (M̅_{w}) between 2000 and 15 000, C₆-C₃₂-alkanols, C₆-C₃₂-alkenols.

2. Composition according to Claim 1, wherein each of the compounds (I) to (IV) contains at least one terminal C₆-C₃₂-hydrocarbon radical.

3. Composition according to Claim 1 or 2, wherein compound (I) is selected from magnesium stearate, calcium stearate, zinc stearate, magnesium montanate, calcium montanate, zinc montanate, magnesium behenate,

4. Composition according to Claim 1 or 2, wherein compound (II) is selected from esters of 3,5-di-tert-butyl-4-hydroxyphenylacetic acid, of β-(3,5-di-tert-butyl-4-hydroxyphenyl)propionic acid, of β-(5-tert-butyl-4-hydroxy-3-methylphenyl)propionic acid or of β-(3,5-dicyclohexyl-4-hydroxyphenyl)-propionic acid with monohydric or polyhydric alcohols.

5. Composition according to Claim 1 or 2, wherein compound (III) is selected from ethylenediamine bisstearyl amide, erucic acid amide, oleic acid amide, stearic acid amide, behenic acid amide and montanic acid amide.

6. Composition according to one or more of the preceding claims, wherein the compounds (I) to (IV) are each selected from:
| | |
|---|---|
| Compound (I): | magnesium stearate and calcium stearate, |
| Compound (II): | octadecyl-3-(3,5-di-tert-butyl-4-hydoxyphenyl)-propionate |
| Compound (III): | ethylenediamine bisstearyl amide and erucic acid amide, |
| Compound (IV): | paraffin oils, low molecular weight styrene/ acrylonitrile copolymers and α-methylstyrene/ acrylonitrile copolymers. |

7. Composition according to one or more of the preceding claims, wherein the quantitative ratios of at least 3 components selected from (I), (II), (III) and (IV) have the following relationship:
(I) <_ (IV) ≤ (II) ≤ (III) or (I) ≤ (IV) ≤ (III) ≤ (II).

8. Composition according to one or more of the preceding claims, containing 0.5 to 5 parts by weight of C) per 100 parts by weight of A + B.

9. Composition according to one or more of the preceding claims, wherein component B.2 is selected from diene or alkyl acrylate rubbers or EPDM rubbers.

10. Composition according to one or more of the preceding claims, containing processing aids, stabilizers, pigments, antistatics and/or fillers.

11. Use of the composition according to one or more of the preceding claims for producing moulded articles.

12. Moulded articles obtainable from the composition according to one or more of the preceding claims.

13. Additive combination containing at least 3 components selected from compounds I), II), III) and IV), where I) denotes a compound having at least one structural unit 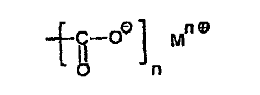
M = metal and
n = valency of the metal M,
II) denotes a compound having at least one structural unit 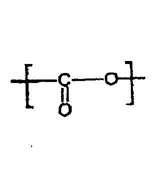 and at least one structural unit 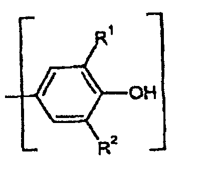 where R¹ and R² are, independently of one another, H, C₁-C₂₀-hydrocarbon radicals,
III) denotes a compound having at least one structural unit 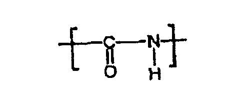 and
IV) is a compound selected from paraffin oils, hydrocarbon waxes, polystyrene produced by using C₈-C₁₈-alkyl mercaptans as molecular weight regulators with mean molecular weights (M̅_{w}) between 2000 and 15 000, styrene/acrylonitrile copolymer produced by using C₈-C₁₈-alkyl mercaptans as molecular weight regulators with mean molecular weights (M̅_{w}) between 2000 and 15 000, α-methylstyrene/acrylonitrile copolymer produced using C₈-C₁₈-alkyl mercaptans as molecular weight regulators with mean molecular weights (M̅_{w}) between 2000 and 15 000, polymethyl methacrylate produced by using C₈-C₁₈-alkyl mercaptans as molecular weight regulators with mean molecular weights (M̅_{w}) between 2000 and 15 000, C₆-C₃₂-alkanols, C₆-C₃₂-alkenols.

## Revendications

1. Composition contenant
A) de 5 à 95% en poids d'un ou de plusieurs homopolymères, copolymères ou terpolymères thermoplastiques du styrène, de l'α-méthylstyrène, du styrène substitué dans le noyau, du méthacrylate de méthyle, de l'acrylonitrile, du méthacrylonitrile, de l'anhydride maléique, du maléinimide N-substitué ou de mélanges de ces derniers,
B) de 5 à 95% en poids d'un ou de plusieurs polymères greffés de
B.1) 5 à 90 parties en poids de styrène, d'α-méthylstyrène, de styrène substitué dans le noyau, de méthacrylate de méthyle, d'acrylonitrile, de méthacrylonitrile, d'anhydride maléique, de maléinimide N-substitué ou de mélanges de ces derniers,
B.2) 95 à 10 parties en poids d'au moins un caoutchouc ayant une température de transition vitreuse ≤ 10°C,
et
C) de 0,05 à 10 parties en poids (pour 100 parties en poids de A + B) d'une combinaison d'au moins 3 composants sélectionnés parmi les composés I), II), III) et IV), I) étant un composé ayant au moins une unité de structure 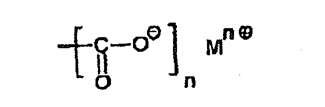
M = métal et
n = valence du métal M,
II) étant un composé ayant au moins une unité de structure 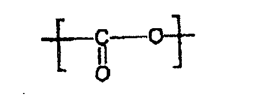 et au moins une unité de structure 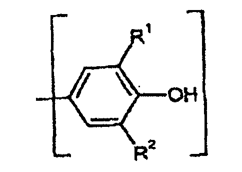 R¹ et R² étant indépendamment H, des radicaux hydrocarbonés en C₁-C₂₀,
III) étant un composé ayant au moins une unité de structure 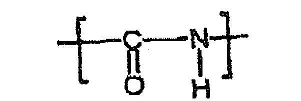 et
IV) étant un composé sélectionné parmi les huiles de paraffine, les cires d'hydrocarbures, le polystyrène fabriqué par utilisation de C₈-C₁₈-alkylmercaptans en tant qu'agents régulateurs du poids moléculaire ayant des poids moléculaires moyens (M̅_{w}) compris entre 2 000 et 15 000, le copolymère styrène/acrylonitrile fabriqué par utilisation de C₈-C₁₈-alkylmercaptans en tant qu'agents régulateurs du poids moléculaire ayant des poids moléculaires moyens (M̅_{W}) compris entre 2 000 et 15 000, le copolymère a-méthylstyrène/acrylonitrile fabriqué par utilisation de C₈-C₁₈-alkylmercaptans en tant qu'agents, régulateurs du poids moléculaire ayant des poids moléculaires moyens (M̅_{w}) compris entre 2 000 et 15 000, le polyméthacrylate de méthyle fabriqué par utilisation de C₈-C₁₈-alkylmercaptans en tant qu'agents régulateurs du poids moléculaire ayant des poids moléculaires moyens (M̅_{w}) compris entre 2 000 et 15 000, des alcanols en C₆-C₃₂, des alcénols en C₆-C₃₂.

2. Composition selon la revendication 1, chacun des composés (I) à (IV) contenant au moins un radical hydrocarboné en C₆-C₃₂ terminal.

3. Composition selon la revendication 1 ou 2, le composé (I) étant sélectionné parmi le stéarate de magnésium, le stéarate de calcium, le stéarate de zinc, le montanate de magnésium, le montanate de calcium, le montanate de zinc, le béhénate de magnésium, le béhénate de calcium, le béhénate de zinc, l'oléate de magnésium, l'oléate de calcium, l'oléate de zinc.

4. Composition selon la revendication 1 ou 2, le composé (II) étant sélectionné parmi les esters de l'acide 3,5-di-tert-butyl-4- hydroxyphénylacétique, de l'acide ß-(3,5-di-tert-butyl-4-hydroxyphényl)propionique, de l'acide ß-(5-tert-butyl-4-hydroxy-3-méthylphényl)propionique ou de l'acide ß-(3,5-dicyclohexyl-4-hydroxyphényl)-propionique avec des alcools monohydriques ou polyhydriques.

5. Composition selon la revendication 1 ou 2, le composé (III) étant sélectionné parmi l'amide de l'acide éthylènediaminebisstéarylique, l'amide de l'acide érucique, l'amide de l'acide oléique, l'amide de l'acide stéarique, l'amide de l'acide béhénique, l'amide de l'acide montanique.

6. Composition selon l'une ou plusieurs des revendications précédentes, les composés (I) à (IV) étant sélectionnés à chaque fois parmi:
pour le composé (I): le stéarate de magnésium et le stéarate de calcium,
pour le composé (II): l'octadécyl-3-(3,5-di-tert-butyl-4-hydroxyphényl)-propionate,
pour le composé (III): l'amide de l'acide éthylènediaminebisstéarylique et l'amide de l'acide érucique,
pour le composé (IV): des huiles de paraffines, des copolymères styrène/acrylonitrile et des copolymères α-méthylstyrène/acrylonitrile à poids moléculaires faibles.

7. Composition selon l'une ou plusieurs des revendications précédentes, les rapports quantitatifs d'au moins 3 composants sélectionnés parmi (I), (II), (III) et (IV) ayant la relation
(I) ≤ (IV) ≤ (II) ≤ (III) ou (I) ≤ (IV) ≤ (III) ≤ (II).

8. Composition selon l'une ou plusieurs des revendications précédentes contenant de 0,5 à 5 parties en poids de C) pour 100 parties en poids de A+B.

9. Composition selon l'une ou plusieurs des revendications précédentes, le composant B.2 étant sélectionné parmi les caoutchoucs de diène ou d'acrylate d'alkyle ou les caoutchoucs EPDM.

10. Composition selon l'une ou plusieurs des revendications précédentes, contenant des agents d'assistance à la mise en oeuvre, des agents de stabilisation, des pigments, des agents antistatiques et/ou des charges.

11. Utilisation de la composition selon l'une ou plusieurs des revendications précédentes en vue de la fabrication de corps moulés.

12. Corps moulés, que l'on peut obtenir à partir de la composition selon l'une ou plusieurs des revendications précédentes.

13. Combinaison d'additifs contenant au moins 3 composants sélectionnés parmi les composés I), II), III) et IV), I) étant un composé ayant au moins une unité de structure 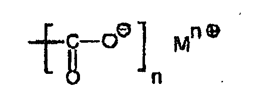
M = métal et
n = valence du métal M,
II) étant un composé ayant au moins une unité de structure 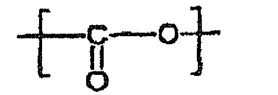 et au moins une unité de structure 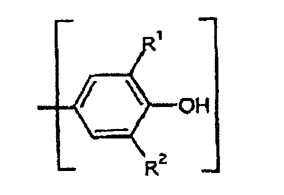 R¹ et R² étant indépendamment l'un de l'autre H, des radicaux hydrocarbonés en C₁-C₂₀,
III) étant un composé ayant au moins une unité de structure 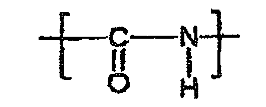 et
IV) étant un composé sélectionné parmi les huiles de paraffine, les cires d'hydrocarbures, le polystyrène fabriqué par utilisation de C₈-C₁₈-alkylmercaptans en tant qu'agents régulateurs du poids moléculaire ayant des poids moléculaires moyens (M̅_{w}) compris entre 2 000 et 15 000, le copolymère styrène/acrylonitrile fabriqué par utilisation de C₈-C₁₈-alkylmercaptans en tant qu'agents régulateurs du poids moléculaire ayant des poids moléculaires moyens (M̅_{w}) compris entre 2 000 et 15 000, le copolymère a-méthylstyrène/acrylonitrile fabriqué par utilisation de C₈-C₁₈-alkylmercaptans en tant qu'agents régulateurs du poids moléculaire ayant des poids moléculaires moyens (M̅_{w}) compris entre 2 000 et 15 000, le polyméthacrylate de méthyle fabriqué par utilisation de C₈-C₁₈-alkylmercaptans en tant qu'agents régulateurs du poids moléculaire ayant des poids moléculaires moyens (M̅_{w}) compris entre 2 000 et 15 000, des alcanols en C₆-C₃₂, des alcénols en C₆-C₃₂.
